# EUROPÄISCHE PATENTSCHRIFT

(11) **EP 3 364 846 B1**
(45) Veröffentlichungstag und Bekanntmachung des Hinweises auf die Patenterteilung: **08.01.2025**
(21) Anmeldenummer: 16782284.0
(22) Anmeldetag: 19.10.2016
(51) Int. Cl.: A47L 15/00, A47L 15/42, C02F 1/42, C02F 1/44, C02F 1/78, C25B 1/13, C02F 1/467

(54) **SPÜLVERFAHREN UND SPÜLMASCHINE**
DISHWASHING METHOD AND DISHWASHER
PROCÉDÉ DE LAVAGE ET LAVE-VAISSELLE

(30) Priorität: 21.10.2015 DE 102015220582
(43) Veröffentlichungstag der Anmeldung: 29.08.2018
(73) Patentinhaber: BWT Aktiengesellschaft, 5310 Mondsee (AT)
(72) Erfinder: PAVAN, Andrea, 35013 Cittadella PD (IT); JOHANN, Jürgen, 69226 Nußloch (DE)
(74) Vertreter: Ostertag & Partner Patentanwälte mbB
(86) Internationale Anmeldenummer: PCT/EP2016/075097
(87) Internationale Veröffentlichungsnummer: WO 2017/067986

(56) Entgegenhaltungen:
- WO-A1-2005/046420
- DE-A1- 102008 024 322
- DE-A1- 102010 027 795
- DE-A1- 102010 053 051
- US-A1- 2004 222 165
- US-A1- 2010 084 340
- US-A1- 2014 325 766

## Beschreibung

Die nachfolgen beschriebene Erfindung betrifft ein Spülverfahren und eine Spülmaschine.

In vielen Bereichen der Industrie sowie in zahlreichen gewerblichen Bereichen wird entsalztes Wasser benötigt. In Kraftwerken zur Herstellung von Dampf, in Backöfen zum Beschwaden des Backraums und in Klimaanlagen zur Verdunstungskühlung. Eine weitere Anwendung, für welche entsalztes Wasser benötigt wird, sind gewerbliche Spülmaschinen, insbesondere Spülmaschinen für die Gastronomie. Entsalztes Wasser wird insbesondere zur Reinigung von Gläsern oder Bestecken eingesetzt. Dadurch wird vermieden, dass sich an diesen Gegenständen Ablagerungen und Flecken aus Salzen, insbesondere aus CaCO₃ (Kalk), bilden.

Technisch wird entsalztes Wasser meist mittels Umkehrosmose hergestellt. Bei der Umkehrosmose handelt es sich um ein Membrantrennverfahren, bei dem ein Rohwasserstrom, oft auch als Feedstrom bezeichnet, unter Druck an einer semipermeablen Membran entlang geführt wird. Der Druck wird meist mittels einer Pumpe, der sogenannten Feedpumpe, erzeugt. Ein Teil des Wassers durchdringt die Membran, wohingegen ein großer Teil der im Wasser gelösten Salze von der Membran zurückgehalten werden. Das durch die Umkehrosmose entsalzte Wasser wird als Permeat bezeichnet. Das salzhaltige Restwasser bezeichnet man als Konzentrat.

Die Umkehrosmose liefert in der Regel ein Wasser mit einer elektrischen Leitfähigkeit im Bereich von 5 µS/cm bis 50 µS/cm. Je nach verwendetem Membrantyp und in Abhängigkeit der Parameter (Druck, Temperatur), bei denen das Verfahren durchgeführt wird, erhält man mehr oder weniger salzfreies Wasser.

Auch bei Verwendung von entsalztem Wasser kommt es in Spülmaschinen häufig zur Geruchsbildung. In manchen Fällen riechen selbst frisch gespülte Gläser, insbesondere Wein- oder Wassergläser, unangenehm. Grund hierfür sind meist mikrobielle Keime, die in Spülmaschinen gute Wachstumsbedingungen finden.

Aus der DE 10 2008 024 322 A1 ist es bekannt, zur Verbesserung der Hygiene das Spülwasser einer Spülmaschine mittels eines Ionentauschers zu demineralisieren und mit Ozon zu versetzen. Hierbei wird ein Ozon/Luft-Gemisch mit Klarspülwasser gemischt, um eine ausreichende Desinfektion des Klarspülwassers auch bei niedrigen Reinigungstemperaturen erzielen zu können.

Aus der DE 10 2010 053051 A1, der US 2010/084340 A1 und der WO 2005/046420 A1 sind Spülmaschinen bekannt, die eine Umkehrosmoseeinrichtung umfassen, in welcher ein Rohwasserstrom in einen Konzentratstrom und einen Permeatstrom aufgetrennt wird, wobei der Permeatstrom in den Spülbehälter der Spülmaschine eingebracht wird, oder die zumindest mit einer Umkehrosmoseeinrichtung gekoppelt sind.

Aus der US 2014/325766 A1 ist eine Waschmaschine bekannt, die eine Einrichtung zur Bereitstellung von Wasser, das eine oxidierende und desinfizierende Wirkung hat, umfasst, wobei die Einrichtung eine Umkehrosmoseeinrichtung und einen Ozongenerator zur Produktion von Ozon aufweist und wobei der Ozongenerator derart angeordnet ist, dass beim Betrieb des Ozongenerators das Ozon in entmineralisiertes Wasser eingetragen werden kann.

Der vorliegenden Erfindung lag die Aufgabe zugrunde, eine Lösung für das oben genannte Problem zu finden.

Diese Aufgabe wird gelöst durch das Spülverfahren mit den Merkmalen des Anspruchs 1 sowie die Spülmaschine mit den Merkmalen des Anspruchs 7. Bevorzugte Ausführungsformen des erfindungsgemäßen Verfahrens sind in den abhängigen Ansprüchen 2 bis 6 definiert. Bevorzugte Ausführungsformen der erfindungsgemäßen Einrichtung finden sich in den abhängigen Ansprüchen 8 bis 11. Der Wortlaut sämtlicher Ansprüche wird hiermit durch Bezugnahme zum Inhalt der vorliegenden Beschreibung gemacht.

Bei dem erfindungsgemäßen Spülverfahren wird in einer Spülmaschine Wasser, das eine oxidierende und desinfizierende Wirkung aufweist, bereitgestellt und als Spülwasser verwendet oder einem Spülwasser zugesetzt.

Zur Bereitstellung des Wassers mit der oxidierenden und desinfizierenden Wirkung wird ein Rohwasserstrom in eine Umkehrosmoseeinrichtung eingespeist und in dieser in einen vergleichsweise salzreichen Konzentrat- und einen vergleichsweise salzarmen Permeatstrom aufgetrennt. Dazu wird - in einem zeitgleichen Prozess - Ozon mittels eines Ozongenerators produziert. Das produzierte Ozon wird in den aus der Umkehrosmoseeinrichtung austretenden Permeatstrom eingetragen. Kurzum, gemäß der vorliegenden Erfindung wird das Permeat einer Umkehrosmose ozonisiert, also mit Ozon versetzt. Der ozonisierte Permeatstrom wird dann entweder direkt als Spülwasser verwendet oder einem Spülwasser zugesetzt.

Grundsätzlich eignet sich das so bereitgestellte ozonisierte Permeat nicht nur zur Verwendung in Spülmaschinen, sondern - auch wenn nicht Teil der beanspruchten Erfindung - es lässt sich grundsätzlich überall da verwenden, wo es auf eine desinfizierende oder oxidierende Wirkung ankommt.

Die Funktionsweise einer Umkehrosmoseeinrichtung wurde eingangs bereits kurz beschrieben und ist dem Fachmann bekannt. Sie muss im Rahmen der vorliegenden Erfindung nicht näher erläutert werden. Es sei an dieser Stelle lediglich kurz erwähnt, dass auch bei der erfindungsgemäß eingesetzten Umkehrosmoseeinrichtung der Rohwasserstrom mittels einer Feedpumpe unter Druck an einer semipermeablen Membran entlang geführt wird.

Das Permeat aus einer Umkehrosmoseeinrichtung eignet sich sehr gut zur Ozonerzeugung, da im Permeat praktisch keine Ozonzehrung durch andere Wasserinhaltsstoffe, wie zum Beispiel organische Stoffe (TOC) erfolgt. Die Ozonkonzentration bleibt lange Zeit stabil und wird nicht verbraucht.

Erfindungsgemäß ist der Eintrag des Ozons in den Permeatstrom an den Betrieb der Umkehrosmoseeinrichtung gekoppelt: Hierunter ist zu verstehen, dass der Permeatstrom immer und ausschließlich dann mit Ozon versetzt wird, wenn die Umkehrosmoseeinrichtung in Betrieb ist. Dies ist insbesondere dann gewährleistet, wenn der Ozongenerator nur in Abhängigkeit des Betriebszustands der Umkehrosmoseeinrichtung Ozon produzieren kann. Mit anderen Worten: Die Umkehrosmose steuert die Ozonproduktion.

Bevorzugt zeichnet sich das Verfahren durch mindestens eines der folgenden Merkmale aus:
2.a) Der Ozongenerator wird mit elektrischer Energie betrieben, die beim Betrieb der Umkehrosmoseeinrichtung gewonnen wird. Hierbei handelt es sich unter anderem um eine mögliche bevorzugte Weiterbildung der erfindungsgemäßen Ausführungsform, gemäß der der Eintrag des Ozons in den Permeatstrom an den Betrieb der Umkehrosmoseeinrichtung gekoppelt ist.
2.b) Die elektrische Energie wird mittels eines Stromgenerators gewonnen, der durch die Strömung des Rohwasserstroms und/oder des Permeatstroms und/oder des Konzentratstroms angetrieben wird. Hierbei handelt es sich unter anderem um eine mögliche bevorzugte Weiterbildung der Ausführungsform gemäß 2.a).

Da der Stromgenerator nur bei vorhandener Strömung elektrische Energie erzeugt, wird die Ozonerzeugung mittelbar von der Feedpumpe der Umkehrosmoseeinrichtung gesteuert.
2.c) Ozon aus dem Ozongenerator wird mittels einer Saugeinrichtung in den Permeatstrom eingetragen, welche durch die Strömung des Permeatstroms angetrieben wird. Hierbei handelt es sich unter anderem um eine weitere mögliche bevorzugte Weiterbildung der erfindungsgemäßen Ausführungsform gemäß der der Eintrag des Ozons in den Permeatstrom an den Betrieb der Umkehrosmoseeinrichtung gekoppelt ist.
2.d) Ozon aus dem Ozongenerator wird mittels einer Pumpeinrichtung in den Permeatstrom eingetragen, welche mit Energie, insbesondere elektrischer Energie, betrieben wird, die beim Betrieb der Umkehrosmoseeinrichtung gewonnen wird. Hierbei handelt es sich unter anderem um eine weitere mögliche bevorzugte Weiterbildung der erfindungsgemäßen Ausführungsform gemäß der der Eintrag des Ozons in den Permeatstrom an den Betrieb der Umkehrosmoseeinrichtung gekoppelt ist.

Bei dem Ozongenerator kann es sich um einen Ozongenerator handeln, der nach dem Prinzip der stillen elektrischen Entladung arbeitet. In bevorzugten Ausführungsformen kann es sich bei dem Ozongenerator aber auch um einen elektrolytischen Ozongenerator handeln, also um einen Ozongenerator, der eine Elektrolysezelle mit einer Anode und einer Kathode aufweist. Beide Vorgehensweisen zur Erzeugung von Ozon sind bereits seit längerem bekannt.

Bei der Ozonerzeugung durch "stille elektrische Entladung" wird mit Hilfe eines Hochspannungswechselfeldes und der damit verbundenen Stoßionisation Ozon aus reinem Sauerstoff oder aus Luftsauerstoff erzeugt. Hierzu wird zwischen zwei Elektroden ein Dielektrikum, z.B. Glas oder Keramik, angeordnet. An die beiden Elektroden wird eine hohe Spannung von häufig mehreren KV angelegt. Zwischen den Elektrode und dem Dielektrikum strömt Luft. Bei Anlegen der Hochspannung entsteht an der Oberfläche des Dielektrikums ein Plasma, in welchem Ozon gebildet wird.

Diese Art der Ozonerzeugung hat sich als besonders wirtschaftlich erwiesen. Das entstehende ozonhaltige Gas (ein Ozon-Sauerstoffgemisch oder ein Ozon-Luft-Gemisch) muss anschließend in den Permeatstrom eingetragen werden.

Bei der Ozonerzeugung mittels einer Elektrolysezelle wird zwischen zwei in Wasser gelagerten Elektroden (der Anode und der Kathode) eine Spannung angelegt, die ausreichend hoch ist, um durch Wasserzersetzung die Bildung freier Sauerstoffatome zu ermöglichen. Die Ozonerzeugung erfolgt in situ. Bevorzugt ist diese Methode insbesondere dann, wenn das zu ozonisierende Wasser eine elektrische Leitfähigkeit von nicht mehr als 40 µS/cm, bevorzugt von nicht mehr als 20 µS/cm, aufweist.

Das im Rahmen des beschriebenen Verfahrens zum Einsatz kommende Permeat weist bevorzugt eine elektrische Leitfähigkeit im Bereich von 5 µS/cm bis 50 µS/cm, bevorzugt im Bereich von 5 µS/cm bis 40 µS/cm, insbesondere im Bereich von 5 µS/cm bis 20 µS/cm, auf. Bei einem Einsatz der Elektrolysezelle wird das Permeat durch die Elektrolysezelle geleitet, in welcher das Ozon erzeugt und gleichzeitig in das Permeat eingetragen wird.

Bei der elektrolytischen Ozonerzeugung wird das Ozon direkt an der Anode erzeugt und im Wasser gelöst. Die Absorption von Ozon im Permeat ist hierbei sehr gut, da das Ozon durch die Wasserspaltung und Erzeugung freier Sauerstoffatome direkt im Wasser gebildet wird.

Grundsätzlich kann auch ein Ozongenerator zum Einsatz kommen, bei dem Ozon mittels UV-Strahlung erzeugt wird. Derartige Generatoren haben allerdings einen vergleichsweise hohen Energieverbrauch.

Sofern es sich bei dem Ozongenerator um einen elektrolytischen Ozongenerator handelt, sind die folgenden Ausführungsformen besonders bevorzugt:
- Der Permeatstrom wird zwecks Entfernung von Härte mittels eines Ionenaustauschers behandelt, bevor er in den Ozongenerator geleitet wird.
   Bei Anwesenheit von Härte, Calcium und Magnesium im Permeat, auch bei sehr geringen Konzentrationen, kommt es an der Kathode der Elektrolysezelle zu Ablagerungen, welche den elektrischen Widerstand der Elektrolysezelle erhöhen. Dadurch kann die Ozonproduktion erschwert oder sogar verhindert werden. Man kann der Bildung von Ablagerungen entgegenwirken, indem man von die Zelle von Zeit zu Zeit, geeignete Zeitintervalle liegen beispielsweise im Bereich weniger Minuten, umpolt. Eine weitere weitaus effizientere Maßnahme ist jedoch die Verwendung eines Ionenaustauschers.
   Eine besonders effiziente Ozonerzeugung wurde bei Verwendung eines Ionenaustauschers in der H+-Form beobachtet. Der Ionenaustauscher kann dabei ein stark saurer oder ein schwach saurer Ionenaustauscher sein.
- Zwischen der Anode und der Kathode ist eine lonenaustauschermembran angeordnet, durch welche die Elektrolysezelle in einen Anodenraum mit der Anode und einen Kathodenraum mit der Kathode unterteilt wird.
   Die erwähnte vergleichsweise geringe elektrische Leitfähigkeit des Permeats im Bereich von 5 µS/cm bis 50 µS/cm führt zu einem relativ hohen elektrischen Widerstand in der Elektrolysezelle. Zur Verringerung dieses Widerstands kann in der Elektrolysezelle zwischen der Anode und der Kathode die lonenaustauschermembran angeordnet werden. Bevorzugt kommt hierbei eine Membran zum Einsatz, die selektiv Kationen passieren lässt, insbesondere einen Membran mit einem mit Sulfonat- oder Carboxylatgruppen modifizierten Polymergerüst aus Polytetrafluorethylen, beispielsweise die unter dem Markennamen Nafion^{®} bekannte Polymermembran der Firma Dupont.
- Sowohl der Anodenraum als auch der Kathodenraum werden mit Permeat aus der Umkehrosmoseeinrichtung gespeist, wobei das Verhältnis, in dem der Permeatstrom auf den Anoden- und den Kathodenraum verteilt werden, mittels eines Stellmittels geregelt werden kann.
   In dieser Ausführungsform wird der Permeatstrom aufgeteilt, bevor er in die Elektrolysezelle eingespeist wird. Ein Teil des Permeatstroms wird in den Anodenraum eingespeist, der andere in den Kathodenraum. Bei dem Stellmittel kann es sich beispielsweise um ein Mehrwegeventil handeln.
- Ausschließlich das aus dem Anodenraum austretende Permeat (der Anolyt) wird einer weiteren Verwendung zugeführt, das aus dem Kathodenraum austretende Permeat (der Katholyt) wird verworfen.
   Bei der Elektrolyse wird an der Kathode Wasserstoff erzeugt. Um zu verhindern dass der Wasserstoff z.B. in eine nachgeordnete Spülmaschine gelangt, wird der mit Wasserstoff beladene Katholyt verworfen.
- Die in der Elektrolysezelle angeordnete lonenaustauschermembran weist Durchbrechungen auf, durch welche Permeat aus dem Kathodenraum in den Anodenraum und umgekehrt gelangen kann. Bei dieser Ausgestaltung ist es möglich, dass der Katholyt durch die Durchbrechungen in der lonenaustauschermembran in den Anodenraum gelangt.
- Ausschließlich der Anodenraum wird mit Permeat aus der Umkehrosmoseeinrichtung gespeist, und ausschließlich aus dem Kathodenraum wird Permeat abgeführt oder ausschließlich der Kathodenraum wird mit Permeat aus der Umkehrosmoseeinrichtung gespeist, und ausschließlich aus dem Anodenraum wird Permeat abgeführt.

In dieser Ausführungsform wird der Permeatstrom zunächst entweder in den Anodenraum oder in den Kathodenraum eingespeist. Durch die Durchbrechungen in der lonenaustauschermembran gelangt er im nächsten Schritt entweder vom Anodenraum in den Kathodenraum oder vom Kathodenraum in den Anodenraum. Aus diesem wird er dann ab- und seiner weiteren Verwendung zugeführt.

Sofern es sich bei dem Ozongenerator um einen Ozongenerator handelt, der nach dem Prinzip der stillen elektrischen Entladung arbeitet, sind die folgenden Ausführungsformen besonders bevorzugt:
- Das Ozon/Luft-Gemisch wird mittels der Saugeinrichtung in den Permeatstrom eingetragen. Bei der Saugeinrichtung kann es sich beispielsweise um eine Strahlpumpe handeln, bei der das Permeat als Treibmedium eingesetzt wird.
- Das Ozon/Luft-Gemisch wird mittels einer Pumpeinrichtung in den Permeatstrom eingetragen, insbesondere mit der oben erwähnten Pumpeinrichtung.
- Der Ozongenerator wird mit Luft gespeist, aus welcher mittels eines Trockenmittels Luftfeuchtigkeit entfernt wurde. Als Trockenmittel kann beispielsweise Blaugel, Silicagel oder ein Molekularsieb verwendet werden.

Das mit Ozon behandelte Permeat kann in der Spülmaschine sowohl zum Reinigen als auch zum Nachspülen von Spülgut verwendet werden. Das ozonisierte Permeat wirkt biozid und viruzid und tötet somit Bakterien und Viren auf den zu spülenden Gegenständen. Hierdurch beugt es besagter Geruchsbildung vor. Gemäß dem erfindungsgemäßen Verfahren gespülte Gläser riechen neutral, sämtliche störenden Gerüche beispielsweise in Wein- und Wassergläsern werden beseitigt.

Ein Spül- und/oder Nachspülvorgang mit dem ozonisierten Permeat erfolgt bevorzugt bei Temperaturen von maximal 50 °C, bevorzugt von maximal 40 °C. Bevorzugt erfolgt der Spül- und/der Nachspülgang bei einer Temperatur > 15 °C und ≤ 50 °C, besonders bevorzugt bei einer Temperatur > 15 °C und ≤ 40 °C. Trotz dieser niedrigen Temperaturen werden dank des ozonisierten Permeats hygienisch einwandfreie Spülergebnisse erzielt. In Folge dieses Niedertemperaturbetriebs sinkt der Energieverbrauch einer gemäß dem erfindungsgemäßen Verfahren betriebenen Spülmaschine.

In bevorzugten Ausführungsformen umfasst das erfindungsgemäße Verfahren mindestens einen Spül- und/oder Nachspülvorgang mit ozonisiertem Permeat enthaltendem oder aus ozonisiertem Permeat bestehendem Spülwasser, das eine Temperatur in einem der genannten Temperaturbereiche, insbesondere eine Temperatur > 15 °C und ≤ 40 °C, aufweist. In einer Weiterbildung umfasst das erfindungsgemäße Verfahren keinen Spül- und/oder Nachspülvorgang mit Spülwasser, das eine Temperatur > 50 °C aufweist. In einer noch weiter bevorzugten Weiterbildung umfasst das erfindungsgemäße Verfahren keinen Spül- und/oder Nachspülvorgang mit Spülwasser, das eine Temperatur > 40 °C aufweist.

Eine erfindungsgemäße Spülmaschine zeichnet sich dadurch aus, dass sie eine Einrichtung zur Bereitstellung von Wasser, das eine oxidierende und desinfizierende Wirkung aufweist, umfasst. Hierunter ist insbesondere zu verstehen, dass in die Spülmaschine eine solche Einrichtung integriert ist oder dass die Spülmaschine mit einer solchen Einrichtung derart gekoppelt ist, dass das Wasser mit der oxidierenden und desinfizierenden Wirkung in der Spülmaschine bereitgestellt werden kann. Die Spülmaschine dient insbesondere zur Durchführung des erfindungsgemäßen Verfahrens. Erfindungsgemäß ist sie entsprechend derart ausgebildet, dass der Eintrag des Ozons in den Permeatstrom an den Betrieb der Umkehrosmoseeinrichtung gekoppelt ist, so dass der Permeatstrom immer und ausschließlich dann mit Ozon versetzt wird, wenn die Umkehrosmoseeinrichtung in Betrieb ist.

In Übereinstimmung mit obigen Ausführungen umfasst die Einrichtung zur Bereitstellung des Wassers mit der oxidierenden und desinfizierenden Wirkung stets
- eine Umkehrosmoseeinrichtung, in welcher ein Rohwasserstrom in einen Konzentrat- und einen Permeatstrom aufgetrennt wird,
- eine Leitung für den Permeatstrom und
- einen Ozongenerator zur Produktion von Ozon.

Der Ozongenerator ist dabei derart innerhalb der Leitung angeordnet oder mit der Leitung gekoppelt, dass beim Betrieb des Ozongenerators das Ozon in den Permeatstrom eingetragen werden kann. Bevorzugt ist der Ozongenerator energetisch derart mit der Umkehrosmoseeinrichtung gekoppelt, dass die Energie für seinen Betrieb beim Betrieb der Umkehrosmoseeinrichtung gewonnen wird.

Besonders bevorzugt umfasst die Einrichtung zur Bereitstellung des Wassers mit der oxidierenden und desinfizierenden Wirkung
- einen Stromgenerator, der durch die Strömung des Rohwasserstroms und/oder des Permeatstroms und/oder des Konzentratstroms angetrieben wird, oder
- eine Saugeinrichtung, welche durch die Strömung des Permeatstroms angetrieben wird, oder
- eine Pumpeinrichtung, welche mit Energie, insbesondere elektrischer Energie, betrieben wird, die beim Betrieb der Umkehrosmoseeinrichtung gewonnen wird.

Betreffend bevorzugte Ausführungsformen des verwendeten Ozongenerators und der verwendeten Saugeinrichtung kann auf die entsprechenden Teile der Beschreibung des erfindungsgemäßen Verfahrens verwiesen werden.

Besonders bevorzugt ist der elektrolytische Ozongenerator in die Leitung für dem Permeatstrom integriert und umfasst eine Elektrolysezelle mit einer Anode und einer Kathode, zwischen denen eine Spannung angelegt werden kann, die ausreichend hoch ist, dass sich an der Anode Ozon bildet.

Die Einrichtung zur Bereitstellung des Wassers mit der oxidierenden und desinfizierenden Wirkung kann einen Ionenaustauscher umfassen, mittels dem der Permeatstrom zwecks Entfernung von Härte behandelt werden kann, bevor das Ozon in den Permeatstrom eingetragen wird.

In Ausführungsformen, bei denen der Ozongenerator ein elektrolytischer Ozongenerator ist, sind folgende Ausgestaltungen der Einrichtung bevorzugt, gegebenenfalls auch in Kombination miteinander:
- Zwischen der Anode und der Kathode des elektrolytischen Ozongenerators ist eine Ionenaustauschermembran angeordnet, durch welche die Elektrolysezelle in einen Anodenraum mit der Anode und einen Kathodenraum mit der Kathode unterteilt wird.
- Die Einrichtung umfasst ein Stellmittel, mit dem geregelt werden kann, in welchem Verhältnis der Anodenraum und der Kathodenraum mit Permeat aus der Umkehrosmoseeinrichtung gespeist werden.
- Die in der Elektrolysezelle angeordnete lonenaustauschermembran weist Durchbrechungen auf, durch welche Permeat aus dem Kathodenraum in den Anodenraum und umgekehrt gelangen kann.
- Die Elektrolysezelle weist einen in den Anodenraum mündenden Zulauf für Permeat auf, der mit der Leitung für den Permeatstrom verbunden ist, sowie einen aus dem Kathodenraum austretenden Ablauf, über den ozonisiertes Permeat aus der Elektrolysezelle abgeführt werden kann.
- Die Elektrolysezelle weist einen in den Kathodenraum mündenden Zulauf für Permeat auf, der mit der Leitung für den Permeatstrom verbunden ist, sowie einen aus dem Anodenraum austretenden Ablauf, über den ozonisiertes Permeat aus der Elektrolysezelle abgeführt werden kann.

In Ausführungsformen, bei denen der Ozongenerator ein Ozongenerator ist, der nach dem Prinzip der stillen elektrischen Entladung arbeitet, ist die Saugeinrichtung in der Regel derart mit dem Ozongenerator gekoppelt, dass ein in dem Generator gebildetes Ozon/Luft- oder Ozon/Sauerstoff-Gemisch in den Permeatstrom eingetragen werden kann.

In bevorzugten Ausführungsformen zeichnet sich die erfindungsgemäße Spülmaschine durch ein Spülprogramm aus, das mindestens einen Spül- und/oder Nachspülvorgang mit ozonisiertem Permeat enthaltendem oder aus ozonisiertem Permeat bestehendem Spülwasser, das eine Temperatur von bis zu 50 °C oder bis zu 40 °C, insbesondere eine Temperatur > 15 °C und ≤ 50 °C oder eine Temperatur > 15 °C und ≤ 40 °C, aufweist. In einer Weiterbildung umfasst das Spülprogramm keinen Spül- und/oder Nachspülvorgang mit Spülwasser, das eine Temperatur > 50 °C aufweist. In einer noch weiter bevorzugten Weiterbildung umfasst das Spülprogramm keinen Spül- und/oder Nachspülvorgang mit Spülwasser, das eine Temperatur > 40 °C aufweist.

Grundsätzlich lässt sich die beschriebene Einrichtung zur Bereitstellung des Wassers mit der oxidierenden und desinfizierenden Wirkung, nicht nur mit einer Spülmaschine kombinieren, sondern - auch wenn nicht Teil der beanspruchten Erfindung - können auch Luftbefeuchter oder Verdunstungskühler die beschriebene Einrichtung umfassen. In den beiden letztgenannten Fällen kommt es zu einer gezielten Verdunstung von Wasser, im einen Fall zur Erhöhung der Luftfeuchtigkeit und im anderen Fall zur Herbeiführung einer Kühlung. Das ozonisierte Permeat kann das zu verdunstende Wasser bilden oder diesem zugesetzt werden.

Der Einsatz der Einrichtung in einem Verdunstungskühler oder in einem Luftbefeuchter wirkt einer Verkeimung dieser Vorrichtungen entgegen.

Weitere Merkmale der Erfindung sowie aus der Erfindung resultierende Vorteile ergeben sich aus der nachfolgenden Beschreibung der Zeichnungen, anhand derer die Erfindung illustriert wird. Die nachfolgend beschriebenen Ausführungsformen dienen lediglich zur Erläuterung und zum besseren Verständnis der Erfindung und sind in keiner Weise einschränkend zu verstehen.

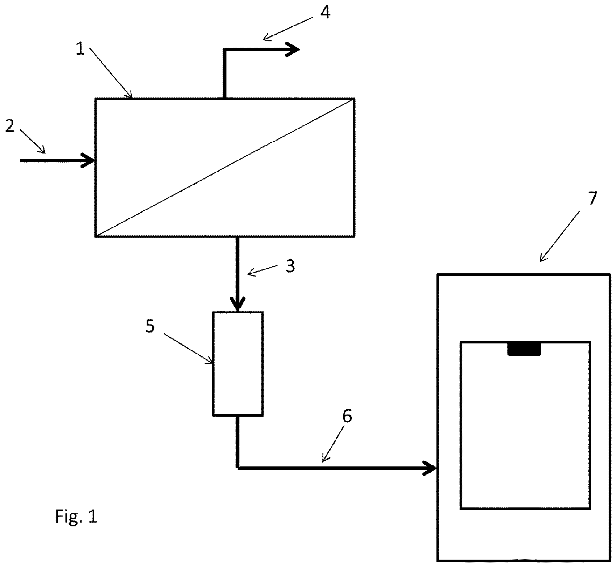

Fig. 1 zeigt eine Umkehrosmoseeinrichtung 1 mit einem Rohwasserstrom 2, einem Konzentratstrom 4 und einem Permeatstrom 3. Der Permeatstrom 3 wird durch einen Ozongenerator 5 mit Ozon angereichert und über die Leitung 6 in die Spülmaschine 7 eingeleitet.

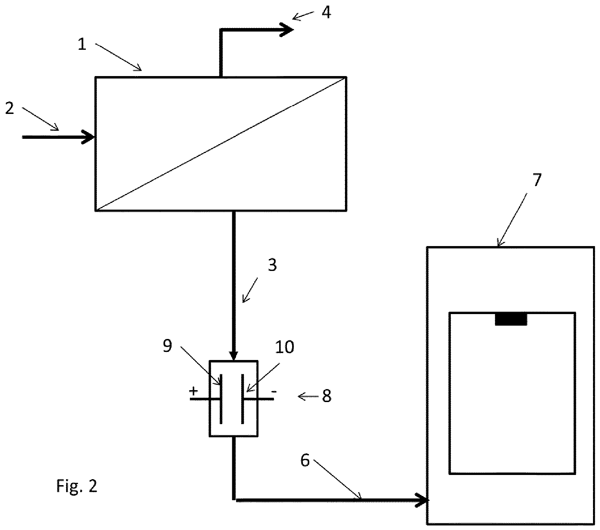

Fig. 2 zeigt eine Anordnung mit einem elektrolytischen Ozongenerator. Das Permeat 3 wird durch die eine Elektrolysevorrichtung mit zwei Elektroden 9 und 10 geleitet, wobei an der Anode 9 Ozon erzeugt und im Permeat unmittelbar gelöst wird.

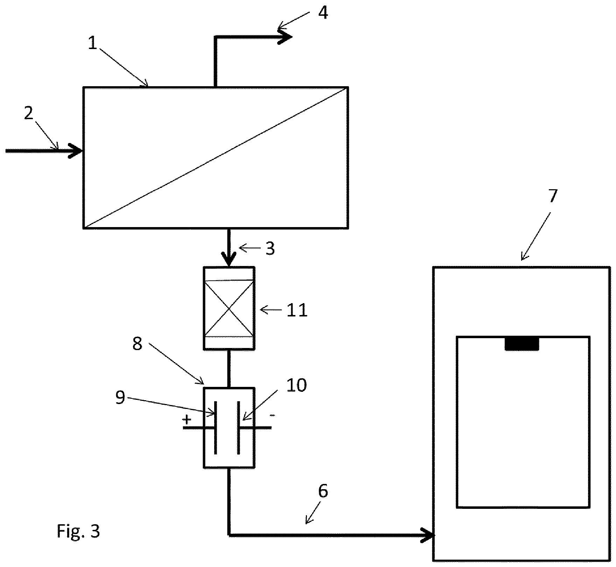

Fig. 3 zeigt eine Ausführungsform einer Einrichtung zur Bereitstellung von Wasser mit einer oxidierenden und desinfizierenden Wirkung mit einem Ionenaustauscher 11 vor der Elektrolysevorrichtung 8. Der Ionenaustauscher 11 kann z.B. ein Mischbettfilter oder ein Filter mit stark saurem Ionenaustauscher in der Natrium- oder Kaliumform sein. Er dient zur Enthärtung des Permeats.

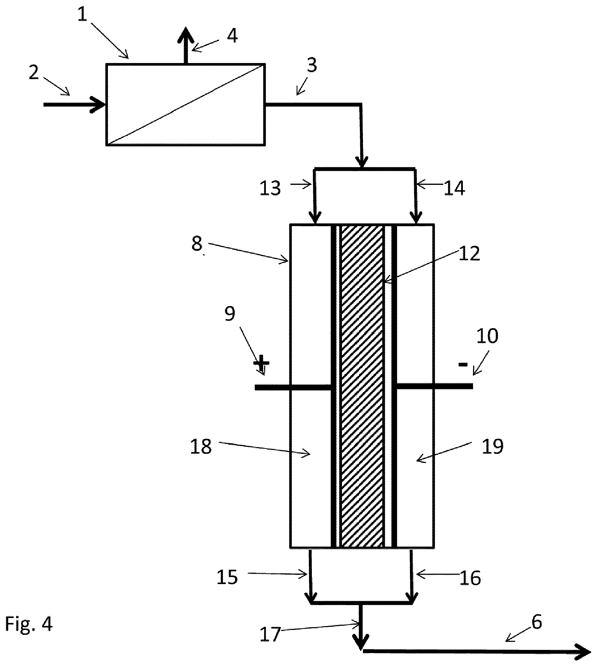

Fig. 4 zeigt eine Elektrolysevorrichtung 8 mit einer lonenaustauschermembran 12, welche zwischen der Anode 9 und der Kathode 10 angeordnet ist. Der Permeatstrom 3 wird aufgeteilt in einen Anodenraumzulauf 13 zum Anodenraum 18 und einen Kathodenraumzulauf 14 in den Kathodenraum 19. Im Anodenraum 18 wird an der Anode 9 Ozon produziert, welches mit dem Anolyten 15 den Anodenraum verlässt. Der Katholyt 16 wird mit dem Anolyten 15 in der Leitung 17 gemischt. Die Leitung 17 wird mit der Zulaufleitung 6 zur Spülmaschine verbunden.

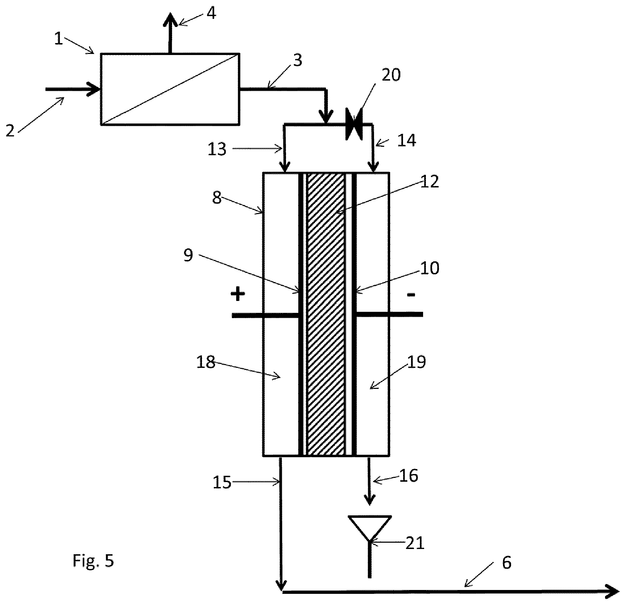

In Fig. 5 wird der Katholyt 16 in die Vorrichtung 21 eingeleitet. Der Volumstrom des Katholyten 16 wird mit Hilfe der Stelleinrichtung 20 eingestellt. Der aus der Kathodenraum 18 austretende Anolyt 15 wird mit dem Zulauf 6 zur Spülmaschine verbunden. In die Spülmaschine 7 gelangt hierdurch nur ozonisiertes Permeat.

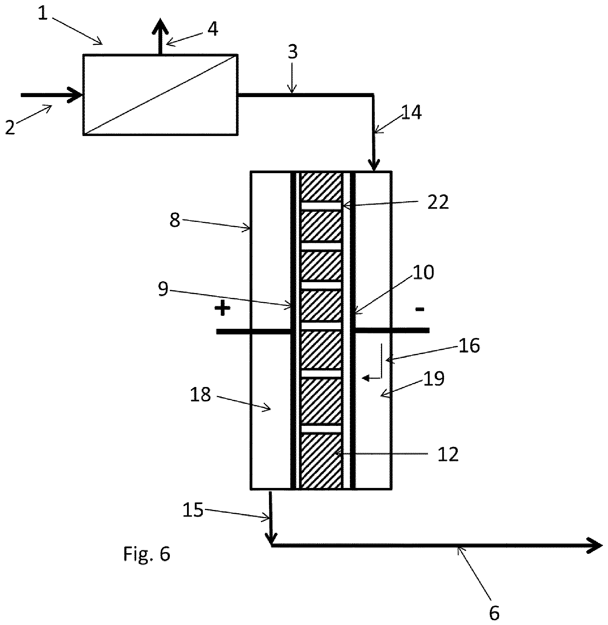

Eine besondere Ausführungsform der Elektrolysevorrichtung zeigt Fig. 6. Die Ionenaustauschermembran 12, welche zwischen der Anode 9 und der Kathode 10 angeordnet ist, wird mit Durchbrechungen 22 ausgeführt. Hierdurch ist es möglich, dass der Katholyt 16 durch die Durchbrechungen 22 der lonenaustauschermembran 12 in den Anodenraum 18 gelangt. An der Anode 9 wird Ozon erzeugt, der Anolyt 15 verlässt den Anodenraum 18. Der Anolyt 15 strömt in die Zulaufleitung 6 zur Spülmaschine.

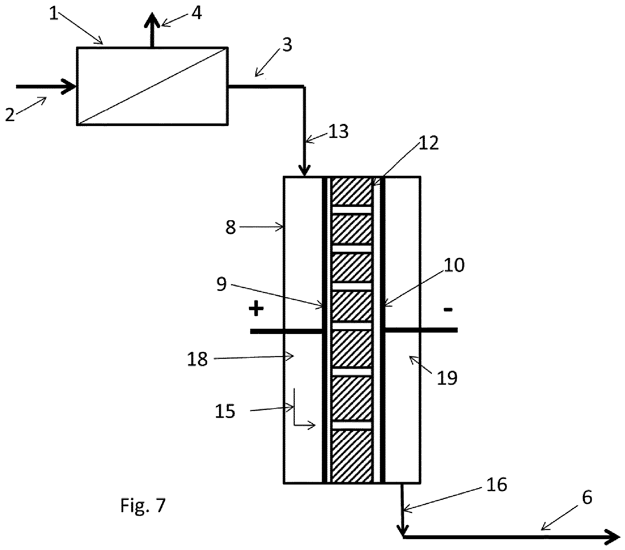

Des Weiteren ist es auch möglich, dass das Permeat 3 durch den Zulauf 13 in die Anodenraum 18 einströmt. An der Anode 9 wird Ozon erzeugt und durch die Durchbrechungen 22 der Ionenaustauschermembran 12 strömt der Anolyt 15 in die Kathodenraum 19. Der mit Ozon angereicherte Katholyt strömt über die Leitung 16 in den Zulauf 6 zur Spülmaschine 7. Diese Anordnung zeigt Fig. 7.

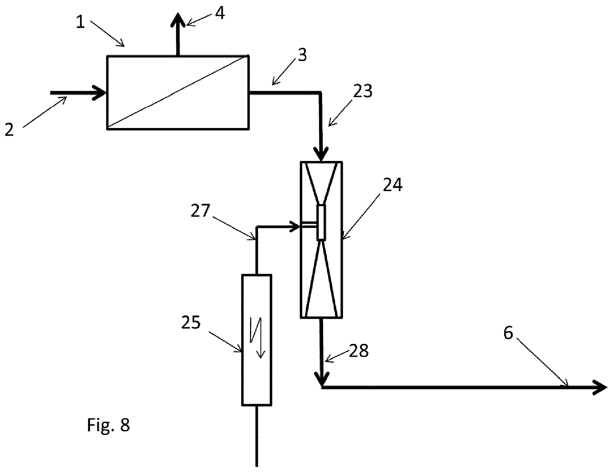

Bei der in Fig. 8 dargestellten Ausführungsform wird die Ozonerzeugung mittels stiller Entladung durchgeführt. Bei der stillen Entladung wird zwischen zwei Elektroden ein Dielektrikum, z.B. Glas oder Keramik, angeordnet. Das bei der Entladung entstehende Luft/Ozon Gemisch kann von einem Injektor 24, Fig. 8 angesaugt werden. Hier wird im Ozongenerator 25 Ozon erzeugt und über die Leitung 27 vom Injektor 24 angesaugt. Der Treibstrom des Injektors ist das Permeat 3 der Umkehrosmoseeinrichtung 1. Der Ablauf 28 des Injektors 24 ist mit Ozon angereichert und strömt in die Zulaufleitung 6 der Spülmaschine 7.

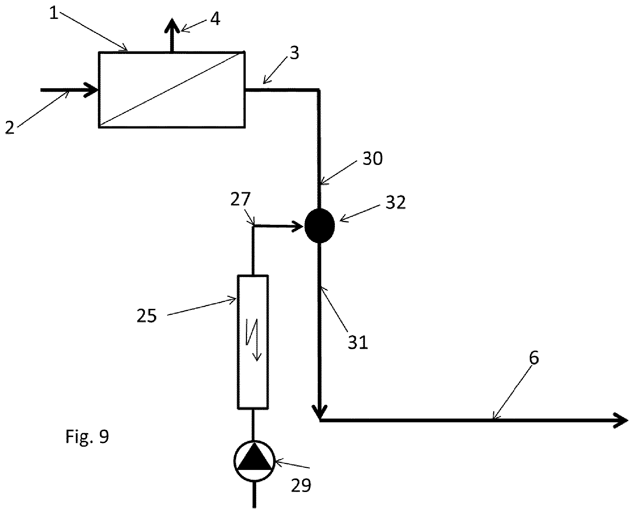

An Stelle des Injektors 24 kann auch eine Mischstrecke 32 vorgesehen sein. Eine entsprechende Ausführungsform der Einrichtung zur Bereitstellung von Wasser mit einer oxidierenden und desinfizierenden Wirkung ist in Fig. 9 dargestellt. Luft wird mittels einer Pumpe 29 durch den Ozongenerator 25 gefördert, in dem sie mit Ozon angereichert wird, und über die Leitung 27 der Mischstrecke 32 zugeführt. In der Mischstrecke 32 wird das Permeat 3, welches über die Leitung 30 in die Mischstrecke 32 eingeleitet wird, mit dem Ozon gemischt. Das mit Ozon angereicherte Permeat 31 wird in die Zulaufleitung 6 der Spülmaschine 7 eingeleitet.

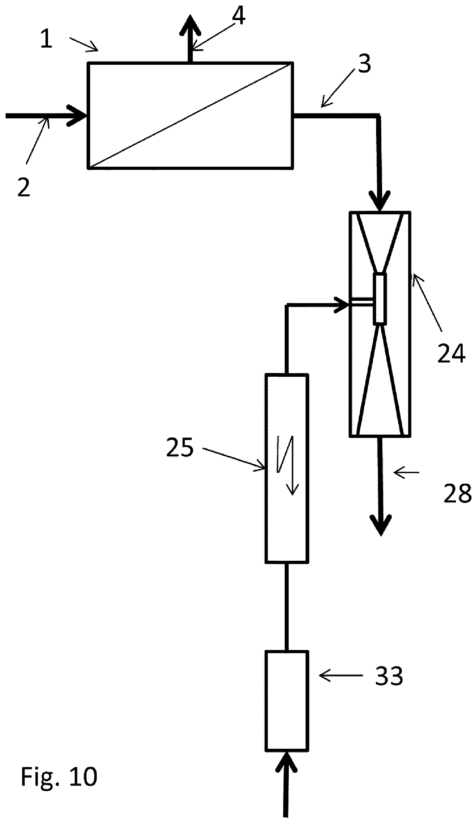

Zur Erhöhung der Ozonproduktion im Ozongenerator kann man die Luft vor Eintritt in den Ozongenerator mittels eines Lufttrockners 33 trocknet. Der Lufttrockner kann mit einem Trocknungsmittel, zum Beispiel Molekularsieb, Silikagel oder auch Blaugel, befüllt sein, siehe Fig. 10.

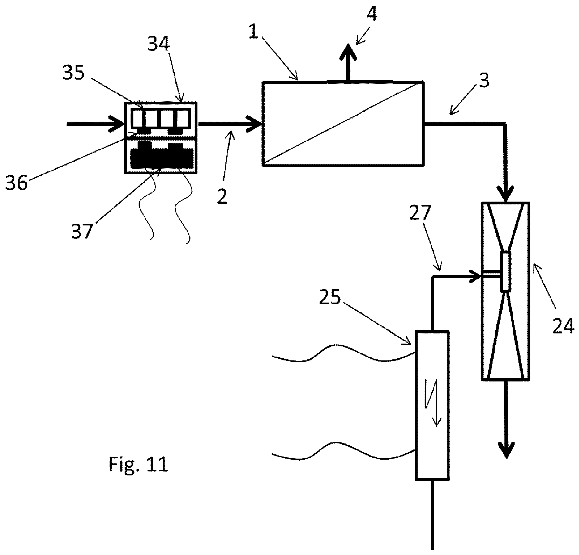

Zur Erzeugung der notwendigen elektrischen Energie für die stille Entladung kann ein Stromgenerator 34 in den Zulauf der Umkehrosmose eingebaut werden, siehe Fig. 11. Der Stromgenerator besteht aus einer Turbine 35 und einem Generator 37. Turbine und Stromgenerator sind räumlich getrennt, d.h. die Antriebseinheit besteht aus einer Magnetkupplung 36, wodurch verhindert wird, das Wasser in den Stromgenerator 37 eintritt. Die Enthalpie des Rohwasserstroms betreibt den Stromgenerator 34, welcher genügend Energie erzeugt, um die Ozonkonzentration für das Permeat zu erzeugen.

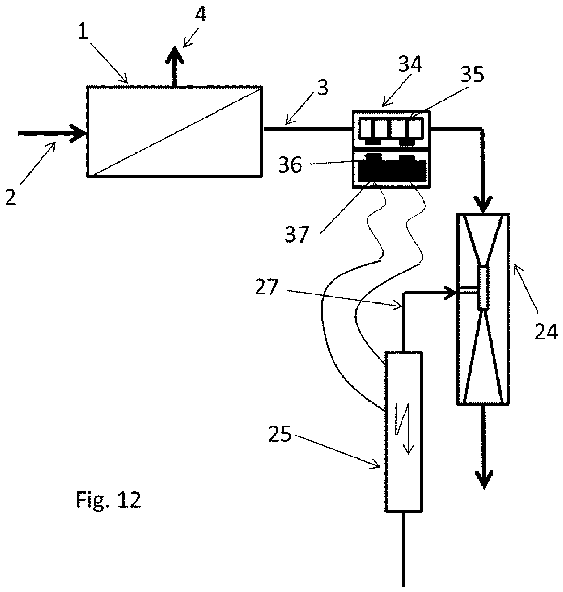

Fig. 12 zeigt eine Anordnung, bei der der Stromgenerator 34 im Permeat der Umkehrosmose angeordnet ist. Die Enthalpie des Permeats treibt den Stromgenerator 34 zur Erzeugung der Ozonfracht an.

Der Integration eines Stromgenerators in die Permeatleitung, die Konzentratleitung oder in die Feedleitung ist vorteilhaft, da die Turbine nur dann anläuft und somit Strom produziert, wenn die Umkehrosmoseeinrichtung entsalztes Wasser (Permeat) liefert. Die Ozonproduktion startet somit automatisch, ohne eine weitere Messgröße wie Druck oder Durchfluss, mit dem Betrieb der Umkehrosmose.

## Patentansprüche

1. Spülverfahren, bei dem in einer Spülmaschine (7) Wasser, das eine oxidierende und desinfizierende Wirkung aufweist, bereitgestellt und als Spülwasser verwendet oder einem Spülwasser zugesetzt wird, wobei zur Bereitstellung des Wassers
a) ein Rohwasserstrom (2) in eine Umkehrosmoseeinrichtung (1) eingespeist und in dieser in einen Konzentratstrom (4) und einen Permeatstrom (3) aufgetrennt wird,
b) Ozon mittels eines Ozongenerators (5, 25) produziert wird,
c) das Ozon in den aus der Umkehrosmoseeinrichtung (1) austretenden Permeatstrom (3) eingetragen wird und
d) der Eintrag des Ozons in den Permeatstrom (3) derart an den Betrieb der Umkehrosmoseeinrichtung (1) gekoppelt ist, dass der Permeatstrom (3) immer und ausschließlich dann mit Ozon versetzt wird, wenn die Umkehrosmoseeinrichtung (1) in Betrieb ist.

2. Verfahren nach Anspruch 1, ferner umfassend mindestens eines der folgenden Merkmale:
a) Der Ozongenerator wird mit elektrischer Energie betrieben, die beim Betrieb der Umkehrosmoseeinrichtung gewonnen wird, wobei bevorzugt die elektrische Energie mittels eines Stromgenerators (34) gewonnen wird, der durch die Strömung des Rohwasserstroms und/oder des Permeatstroms und/oder des Konzentratstroms angetrieben wird;
b) Ozon aus dem Ozongenerator wird mittels einer Saugeinrichtung in den Permeatstrom eingetragen, welche durch die Strömung des Permeatstroms angetrieben wird, oder
Ozon aus dem Ozongenerator wird mittels einer Pumpeinrichtung in den Permeatstrom eingetragen, welche mit Energie, insbesondere elektrischer Energie, betrieben wird, die beim Betrieb der Umkehrosmoseeinrichtung gewonnen wird.

3. Verfahren nach Anspruch 1 oder Anspruch 2, wobei der Ozongenerator nach dem Prinzip der stillen Entladung arbeitet oder der Ozongenerator ein elektrolytischer Ozongenerator ist.

4. Verfahren nach Anspruch 3, ferner umfassend mindestens eines der folgenden Merkmale:
a) Der Permeatstrom wird zwecks Entfernung von Härte mittels eines Ionentauschers (11) behandelt, bevor er in den Ozongenerator geleitet wird;
b) Der Ozongenerator ist ein elektrolytischer Ozongenerator, und der
Permeatstrom wird durch den elektrolytischen Ozongenerator geleitet, wobei der Ozongenerator eine Elektrolysezelle mit einer Anode (9) und einer Kathode (10) umfasst. zwischen denen eine Spannung angelegt wird, die ausreichend hoch ist, dass sich an der Anode (9) Ozon bildet, wobei bevorzugterweise zwischen der Anode (9) und der Kathode (10) eine Ionenaustauschermembran (12) angeordnet ist, durch welche die Elektrolysezelle in einen Anodenraum (18) mit der Anode (9) und einen Kathodenraum (19) mit der Kathode (10) unterteilt wird insbesondere mit mindestens einem der folgenden Merkmale:
- -Sowohl der Anodenraum als auch der Kathodenraum werden mit Permeat aus der Umkehrosmoseeinrichtung gespeist, wobei das Verhältnis, in dem der Permeatstrom auf den Anoden- und den Kathodenraum verteilt werden, mittels eines Stellmittels geregelt werden kann;
- Die in der Elektrolysezelle angeordnete lonenaustauschermembran lässt selektiv Kationen passieren;
- Ausschließlich das aus dem Anodenraum austretende Permeat wird einer weiteren Verwendung zugeführt, das aus dem Kathodenraum austretende Permeat wird verworfen.
- Die in der Elektrolysezelle angeordnete lonenaustauschermembran weist Durchbrechungen (22) auf, durch welche Permeat aus dem Kathodenraum in den Anodenraum und umgekehrt gelangen kann;
- Entweder wird ausschließlich der Anodenraum mit Permeat aus der Umkehrosmoseeinrichtung gespeist, und ausschließlich aus dem Kathodenraum Permeat abgeführt, oder es wird ausschließlich der Kathodenraum mit Permeat aus der Umkehrosmoseeinrichtung gespeist, und ausschließlich aus dem Anodenraum Permeat abgeführt.

5. Verfahren nach Anspruch 3, ferner umfassend mindestens eines der folgenden Merkmale:
a) In dem Ozongenerator, der nach dem Prinzip der stillen Entladung arbeitet, wird ein Ozon/Luft-Gemisch gebildet, wobei bevorzugterweise entweder
das Ozon/Luft-Gemisch mittels der Saugeinrichtung in den Permeatstrom eingetragen wird, welche durch die Strömung des Permeatstroms angetrieben wird, oder das
Ozon/Luft-Gemisch mittels einer Pumpeinrichtung in den Permeatstrom eingetragen wird, insbesondere mit der oben erwähnten Pumpeinrichtung, welche mit Energie, insbesondere elektrischer Energie, betrieben wird, die beim Betrieb der Umkehrosmoseeinrichtung gewonnen wird.
d) Der Ozongenerator wird mit Luft gespeist, aus welcher mittels eines Trockenmittels Luftfeuchtigkeit entfernt wurde.

6. Verfahren nach einem der vorhergehenden Ansprüche, welches mindestens einen Spül- und/oder Nachspülvorgang mit ozonisiertem Permeat enthaltendem oder aus ozonisiertem Permeat bestehendem Spülwasser, das eine Temperatur > 15 °C und ≤ 40 °C aufweist, umfasst.

7. Spülmaschine (7), welche eine Einrichtung zur Bereitstellung von Wasser, das eine oxidierende und desinfizierende Wirkung hat, umfasst, wobei die Einrichtung
a) eine Umkehrosmoseeinrichtung (1), in welcher ein Rohwasserstrom (2) in einen Konzentratstrom (4) und einen Permeatstrom (3) aufgetrennt wird,
b) eine Leitung (6) für den Permeatstrom (3) und
c) einen Ozongenerator (5, 25) zur Produktion von Ozon, aufweist und wobei der Ozongenerator (5, 25) derart innerhalb der Leitung (6) angeordnet oder mit der Leitung (6) gekoppelt ist, dass beim Betrieb des Ozongenerators (5, 25) das Ozon in den Permeatstrom (3) eingetragen werden kann, wobei
d) die Einrichtung derart ausgebildet ist, dass der Eintrag des Ozons in den Permeatstrom (3) an den Betrieb der Umkehrosmoseeinrichtung (1) gekoppelt ist, so dass der Permeatstrom (3) immer und ausschließlich dann mit Ozon versetzt wird, wenn die Umkehrosmoseeinrichtung (1) in Betrieb ist.

8. Spülmaschine nach Anspruch 7, wobei der Ozongenerator energetisch derart mit der Umkehrosmoseeinrichtung gekoppelt ist, dass die Energie für seinen Betrieb beim Betrieb der Umkehrosmoseeinrichtung gewonnen wird.

9. Spülmaschine nach Anspruch 8, , wobei die Einrichtung zur Bereitstellung von Wasser mit oxidierender und desinfizierender Wirkung
a) einen Stromgenerator (34), der durch die Strömung des Rohwasserstroms und/oder des Permeatstroms und/oder des Konzentratstroms angetrieben wird, oder
b) eine Saugeinrichtung, welche durch die Strömung des Permeatstroms angetrieben wird, oder
c) eine Pumpeinrichtung, welche mit Energie, insbesondere elektrischer Energie, betrieben wird, die beim Betrieb der Umkehrosmoseeinrichtung gewonnen wird,
umfasst.

10. Spülmaschine nach einem der Ansprüche 7 bis 9, ferner umfassend mindestens eines der folgenden Merkmale:
a) Der Ozongenerator ist ein Generator, der nach dem Prinzip der stillen Entladung arbeitet und ein Ozon/Luft-Gemisch bildet, insbesondere wobei die Saugeinrichtung, welche durch die Strömung des Permeatstroms angetrieben wird, mit dem Ozongenerator gekoppelt ist, so dass das Ozon/Luft-Gemisch in den Permeatstrom eingetragen werden kann.

11. Spülmaschine nach einem der Ansprüche 7 bis 9, ferner umfassend mindestens eines der folgenden Merkmale:
a) Die Einrichtung zur Bereitstellung von Wasser mit oxidierender und desinfizierender Wirkung umfasst einen Ionentauscher (11), mittels dem der Permeatstrom zwecks Entfernung von Härte behandelt werden kann, bevor das Ozon in den Permeatstrom eingetragen wird;
b) Der Ozongenerator ist ein elektrolytischer Ozongenerator und ist in die Leitung für den Permeatstrom integriert und umfasst eine Elektrolysezelle mit einer Anode (9) und einer Kathode (10), zwischen denen eine Spannung angelegt werden kann, die ausreichend hoch ist, dass sich an der Anode Ozon bildet, wobei insbesondere zwischen der Anode und der Kathode des elektrolytischen Ozongenerators eine lonenaustauschermembran (12) angeordnet ist, durch welche die Elektrolysezelle in einen Anodenraum (18) mit der Anode (9) und einen Kathodenraum (19) mit der Kathode unterteilt wird insbesondere mit mindestens einem der folgenden Merkmale:
- Die Einrichtung zur Bereitstellung von Wasser mit oxidierender und desinfizierender Wirkung umfasst ein Stellmittel, mit dem geregelt werden kann, in welchem Verhältnis der Anodenraum und der Kathodenraum mit Permeat aus der Umkehrosmoseeinrichtung gespeist werden;
- Die in der Elektrolysezelle angeordnete lonenaustauschermembran weist Durchbrechungen (22) auf, durch welche Permeat aus dem Kathodenraum in den Anodenraum und umgekehrt gelangen kann;
- Die Elektrolysezelle weist einen in den Anodenraum mündenden Zulauf für Permeat auf, der mit der Leitung für den Permeatstrom verbunden ist, sowie einen aus dem Kathodenraum austretenden Ablauf, über den ozonisiertes Permeat aus der Elektrolysezelle abgeführt werden kann, oder die Elektrolysezelle weist einen in den Kathodenraum mündenden Zulauf für Permeat auf, der mit der Leitung für den Permeatstrom verbunden ist, sowie einen aus dem Anodenraum austretenden Ablauf, über den ozonisiertes Permeat aus der Elektrolysezelle abgeführt werden kann.

## Claims

1. Dishwashing method in which water that has an oxidizing and disinfecting action is provided in a dishwasher (7) and used as dishwashing water or added to a dishwashing water, wherein, for providing the water,
a) a stream of untreated water (2) is fed into a reverse osmosis device (1) and in the latter is separated into a concentrate stream (4) and a permeate stream (3),
b) ozone is produced by means of an ozone generator (5, 25),
c) the ozone is introduced into the permeate stream (3) emerging from the reverse osmosis device (1) and
d) the introduction of the ozone into the permeate stream (3) is coupled to the operation of the reverse osmosis device (1) in such a way that the permeate stream (3) is always and only ever mixed with ozone when the reverse osmosis device (1) is in operation.

2. Method according to Claim 1, also comprising at least one of the following features:
a) the ozone generator is operated with electrical energy that is obtained during the operation of the reverse osmosis device, wherein preferably the electrical energy is obtained by means of a power generator (34), which is driven by the flow of the stream of untreated water and/or the permeate stream and/or the concentrate stream;
b) ozone from the ozone generator is introduced into the permeate stream by means of a suction device, which is driven by the flow of the permeate stream, or ozone from the ozone generator is introduced into the permeate stream by means of a pumping device, which is operated with energy, in particular electrical energy, that is obtained during the operation of the reverse osmosis device.

3. Method according to Claim 1 or Claim 2, wherein the ozone generator operates on the principle of silent discharge or the ozone generator is an electrolytic ozone generator.

4. Method according to Claim 3, also comprising at least one of the following features:
a) for the purpose of removing hardness, the permeate stream is treated by means of an ion exchanger (11) before it is passed into the ozone generator;
b) the ozone generator is an electrolytic ozone generator and the permeate stream is passed through the electrolytic ozone generator, the ozone generator comprising an electrolytic cell with an anode (9) and a cathode (10), between which a voltage that is sufficiently high for ozone to form at the anode (9) is applied, wherein preferably
arranged between the anode (9) and the cathode (10) is an ion exchange membrane (12), by which the electrolytic cell is subdivided into an anode region (18) with the anode (9) and a cathode region (19) with the cathode (10), in particular with at least one of the following features:
both the anode region and the cathode region are fed with permeate from the reverse osmosis device, it being possible for the ratio in which the permeate stream is distributed between the anode region and the cathode region to be controlled by means of an adjusting means;
the ion exchange membrane arranged in the electrolytic cell selectively allows cations to pass;
only the permeate emerging from the anode region is passed on for further use; the permeate emerging from the cathode region is discarded;
the ion exchange membrane arranged in the electrolytic cell has apertures (22) through which permeate can pass from the cathode region into the anode region and vice versa;
either only the anode region is fed with permeate from the reverse osmosis device, and permeate is only removed from the cathode region, or
only the cathode region is fed with permeate from the reverse osmosis device, and permeate is only removed from the anode region.

5. Method according to Claim 3, also comprising at least one of the following features:
a) in the ozone generator, which operates on the principle of silent discharge, an ozone/air mixture is formed, wherein preferably either
the ozone/air mixture is introduced into the permeate stream by means of the suction device, which is driven by the flow of the permeate stream, or
the ozone/air mixture is introduced into the permeate stream by means of a pumping device, in particular by the aforementioned pumping device, which is operated with energy, in particular electrical energy, that is obtained during the operation of the reverse osmosis device;
d) the ozone generator is fed with air from which air moisture has been removed by means of a desiccant.

6. Method according to one of the preceding claims, which comprises at least one dishwashing and/or rinsing operation with dishwashing water which contains ozonized permeate or consists of ozonized permeate and is at a temperature of > 15°C and ≤ 40°C.

7. Dishwasher (7), which comprises a device for providing water that has an oxidizing and disinfecting action, wherein the device has
a) a reverse osmosis device (1), in which a stream of untreated water (2) is separated into a concentrate stream (4) and a permeate stream (3),
b) a line (6) for the permeate stream (3) and
c) an ozone generator (5, 25) for the production of ozone and wherein the ozone generator (5, 25) is arranged within the line (6) or coupled to the line (6) in such a way that, when the ozone generator (5, 25) is in operation, the ozone can be introduced into the permeate stream (3), wherein
d) the device is formed in such a way that the introduction of the ozone into the permeate stream (3) is coupled to the operation of the reverse osmosis device (1) such that the permeate stream (3) is always and only ever mixed with ozone when the reverse osmosis device (1) is in operation.

8. Dishwasher according to Claim 7, wherein the ozone generator is coupled in terms of energy to the reverse osmosis device in such a way that the energy for its operation is obtained during the operation of the reverse osmosis device.

9. Dishwasher according to Claim 8, wherein the device for providing water with an oxidizing and disinfecting action comprises
a) a power generator (34), which is driven by the flow of the stream of untreated water and/or the permeate stream and/or the concentrate stream, or
b) a suction device, which is driven by the flow of the permeate stream, or
c) a pumping device, which is operated with energy, in particular electrical energy, that is obtained during the operation of the reverse osmosis device.

10. Dishwasher according to one of Claims 7 to 9, also comprising at least one of the following features:
a) the ozone generator is a generator that operates on the principle of silent discharge and forms an ozone/air mixture, in particular wherein the suction device, which is driven by the flow of the permeate stream, is coupled to the ozone generator, so that the ozone/air mixture can be introduced into the permeate stream.

11. Dishwasher according to one of Claims 7 to 9, also comprising at least one of the following features:
a) the device for providing water with an oxidizing and disinfecting action comprises an ion exchanger (11), by means of which the permeate stream can be treated for the purpose of removing hardness before the ozone is introduced into the permeate stream;
b) the ozone generator is an electrolytic ozone generator and is integrated in the line for the permeate stream and comprises an electrolytic cell with an anode (9) and a cathode (10), between which a voltage that is sufficiently high for ozone to form at the anode can be applied, wherein in particular arranged between the anode and the cathode of the electrolytic ozone generator is an ion exchange membrane (12), by which the electrolytic cell is subdivided into an anode region (18) with the anode (9) and a cathode region (19) with the cathode, in particular with at least one of the following features:
the device for providing water with an oxidizing and disinfecting action comprises an adjusting means which can be used to control in which ratio the anode region and the cathode region are fed with permeate from the reverse osmosis device;
the ion exchange membrane arranged in the electrolytic cell has apertures (22) through which permeate can pass from the cathode region into the anode region and vice versa;
the electrolytic cell has an inflow for permeate, which goes into the anode region and is connected to the line for the permeate stream, and also an outflow, which comes out of the cathode region and can be used for discharging ozonized permeate from the electrolytic cell, or the electrolytic cell has an inflow for permeate, which goes into the cathode region and is connected to the line for the permeate stream, and also an outflow, which comes out of the anode region and can be used for discharging ozonized permeate from the electrolytic cell.

## Revendications

1. Procédé de lavage dans lequel de l'eau ayant un effet oxydant et désinfectant est introduite dans un lave-vaisselle (7) et utilisée comme eau de lavage ou ajoutée à l'eau de lavage, afin de fournir de l'eau
a) un flux d'eau brute (2) étant introduit dans un dispositif d'osmose inverse (1) et séparé dans celui-ci en un flux de concentré (4) et un flux de perméat (3),
b) de l'ozone étant produit au moyen d'un générateur d'ozone (5, 25),
c) l'ozone étant introduit dans le flux de perméat (3) qui sort du dispositif d'osmose inverse (1) et
d) l'entrée d'ozone dans le flux de perméat (3) étant associée au fonctionnement du dispositif d'osmose inverse (1) de telle sorte que le flux de perméat (3) soit toujours et uniquement additionné d'ozone lorsque le dispositif d'osmose inverse (1) est en fonctionnement.

2. Procédé selon la revendication 1, comprenant en outre au moins l'une des caractéristiques suivantes :
a) le générateur d'ozone fonctionne avec l'énergie électrique obtenue lors du fonctionnement du dispositif d'osmose inverse, de préférence l'énergie électrique étant obtenue au moyen d'un générateur de puissance (34) qui est entraîné par l'écoulement du flux d'eau brute et/ou du flux de perméat et/ou du flux de concentré ;
b) l'ozone du générateur d'ozone est introduit dans le flux de perméat au moyen d'un dispositif d'aspiration entraîné par l'écoulement du flux de perméat, ou
l'ozone du générateur d'ozone est introduit dans le flux de perméat au moyen d'un dispositif de pompage qui fonctionne avec de l'énergie, en particulier de l'énergie électrique, obtenue lors du fonctionnement du dispositif d'osmose inverse.

3. Procédé selon la revendication 1 ou la revendication 2, le générateur d'ozone fonctionnant sur le principe de décharge silencieuse ou le générateur d'ozone étant un générateur d'ozone électrolytique.

4. Procédé selon la revendication 3, comprenant en outre l'une au moins des caractéristiques suivantes :
a) le flux de perméat est traité au moyen d'un échangeur d'ions (11) afin d'éliminer la dureté avant de passer dans le générateur d'ozone ;
b) le générateur d'ozone est un générateur d'ozone électrolytique, et le flux de perméat passe à travers le générateur d'ozone électrolytique, le générateur d'ozone comprenant une cellule d'électrolyse pourvue d'une anode (9) et d'une cathode (10) entre lesquelles est appliquée une tension qui est suffisamment élevée pour que de l'ozone se forme au niveau de l'anode (9), une membrane échangeuse d'ions (12) étant de préférence disposée entre l'anode (9) et la cathode (10) et divisant la cellule d'électrolyse en un espace anodique (18) pourvue de l'anode (9) et un espace cathodique (19) pourvu de la cathode (10), le procédé présentant notamment l'une au moins des caractéristiques suivantes :
- aussi bien l'espace anodique que l'espace cathodique sont alimentés en perméat provenant du dispositif d'osmose inverse, le rapport avec lequel le flux de perméat est réparti entre les espaces anodique et cathodique pouvant être réglé à l'aide d'un moyen de réglage ;
- la membrane échangeuse d'ions disposée dans la cellule d'électrolyse laisse passer sélectivement les cations ;
- seul le perméat sortant de l'espace anodique est amené à une utilisation ultérieure, le perméat sortant de l'espace cathodique est rejeté,
- la membrane échangeuse d'ions disposée dans la cellule d'électrolyse comporte des passages (22) par lesquels le perméat peut passer de l'espace cathodique dans l'espace anodique et inversement ;
- soit seul l'espace anodique est alimenté en perméat provenant du dispositif d'osmose inverse et seul le perméat de l'espace cathodique est éliminé, soit seul l'espace cathodique est alimenté en perméat provenant du dispositif d'osmose inverse et seul le perméat de l'espace anodique est éliminé.

5. Procédé selon la revendication 3, comprenant en outre l'une au moins des caractéristiques suivantes :
a) un mélange ozone/air est formé dans le générateur d'ozone qui fonctionne sur le principe de décharge silencieuse, de préférence soit le mélange ozone/air étant introduit dans le flux de perméat au moyen du dispositif d'aspiration qui est entraîné par l'écoulement du flux de perméat, soit le mélange ozone/air étant introduit dans le flux de perméat au moyen d'un dispositif de pompage, notamment le dispositif de pompe mentionné ci-dessus qui est alimenté en énergie, en particulier en énergie électrique, obtenue lors du fonctionnement du dispositif d'osmose inverse,
d) le générateur d'ozone est alimenté avec de l'air dont l'humidité a été éliminée à l'aide d'un agent déshydratant.

6. Procédé selon l'une des revendications précédentes, qui comprend au moins un procédé de lavage et/ou de rinçage avec de l'eau de lavage contenant un perméat ozonisé ou comprenant un perméat ozonisé et ayant une température > 15 °C et < 40 °C.

7. Lave-vaisselle (7), qui comprend un dispositif d'alimentation en eau ayant un effet oxydant et désinfectant, le dispositif comportant
a) un dispositif d'osmose inverse (1) dans lequel un flux d'eau brute (2) est séparé en un flux de concentré (4) et un flux de perméat (3),
b) une conduite (6) destinée au flux de perméat (3) et
c) un générateur d'ozone (5, 25) destiné à produire de l'ozone, et le générateur d'ozone (5, 25) étant disposé à l'intérieur de la conduite (6) ou couplé à la conduite (6) de telle sorte que l'ozone puisse être introduit dans le flux de perméat (3) pendant le fonctionnement du générateur d'ozone (5, 25),
d) le dispositif étant conçu de telle sorte que l'entrée d'ozone dans le flux de perméat (3) soit associée au fonctionnement du dispositif d'osmose inverse (1), de sorte que le flux de perméat (3) soit toujours et uniquement ajouté à l'ozone lorsque le dispositif d'osmose inverse (1) est en fonctionnement.

8. Lave-vaisselle selon la revendication 7, le générateur d'ozone étant associé énergétiquement au dispositif d'osmose inverse de manière à ce que l'énergie nécessaire à son fonctionnement soit obtenue lorsque le dispositif d'osmose inverse est en fonctionnement.

9. Lave-vaisselle selon la revendication 8, le dispositif d'alimentation en eau ayant des effets oxydants et désinfectants comprenant
a) un générateur de puissance (34) qui est entraîné par l'écoulement du flux d'eau brute et/ou du flux de perméat et/ou du flux de concentré, ou
b) un dispositif d'aspiration qui est entraîné par l'écoulement du flux de perméat, ou
c) un dispositif de pompage qui fonctionne avec de l'énergie, en particulier de l'énergie électrique, obtenue lors du fonctionnement du dispositif d'osmose inverse.

10. Lave-vaisselle selon l'une des revendications 7 à 9, comprenant en outre l'une au moins des caractéristiques suivantes :
a) le générateur d'ozone est un générateur qui fonctionne sur le principe de décharge silencieuse et qui forme notamment un mélange ozone/air, le dispositif d'aspiration, qui est entraîné par l'écoulement du flux de perméat, étant couplé au générateur d'ozone de sorte que le mélange ozone/air puisse être introduit dans le flux de perméat.

11. Lave-vaisselle selon l'une des revendications 7 à 9, comprenant en outre l'une au moins des caractéristiques suivantes :
a) le dispositif d'alimentation en eau ayant un effet oxydant et désinfectant comprend un échangeur d'ions (11) qui permet de traiter le flux de perméat afin d'éliminer la dureté avant que l'ozone ne soit introduit dans le flux de perméat ;
b) le générateur d'ozone est un générateur d'ozone électrolytique et est intégré dans la conduite du flux de perméat et comprend une cellule d'électrolyse pourvue d'une anode (9) et d'une cathode (10) entre lesquelles peut être appliquée une tension suffisamment élevée pour que de l'ozone se forme sur l'anode, une membrane échangeuse d'ions (12) étant disposée entre l'anode et la cathode du générateur électrolytique d'ozone et divisant la cellule d'électrolyse en un espace anodique (18) pourvu de l'anode (9) et un espace cathodique (19) pourvu de la cathode, le lave-vaisselle présentant notamment l'une au moins des caractéristiques suivantes :
- le dispositif d'alimentation en eau à effet oxydant et désinfectant comprend un moyen de réglage qui permet de régler le rapport avec lequel l'espace anodique et l'espace cathodique sont alimentés en perméat provenant du dispositif d'osmose inverse ;
- la membrane échangeuse d'ions disposée dans la cellule d'électrolyse comporte des passages (22) par lesquels le perméat peut passer de l'espace cathodique à l'espace anodique et inversement ;
- la cellule d'électrolyse comporte une amenée de perméat, qui débouche dans l'espace anodique et qui est reliée à la conduite destinée au flux de perméat, ainsi qu'une sortie qui sort de l'espace cathodique et par laquelle le perméat ozoné peut être éliminé de la cellule d'électrolyse ou
- la cellule d'électrolyse comporte une amenée de perméat, qui débouche dans l'espace cathodique et qui est reliée à la conduite destinée au flux de perméat, ainsi qu'une sortie qui sort de l'espace anodique et par laquelle le perméat ozoné peut être éliminé de la cellule d'électrolyse.
